# EUROPÄISCHE PATENTSCHRIFT

(11) **EP 2 131 007 B1**
(45) Veröffentlichungstag und Bekanntmachung des Hinweises auf die Patenterteilung: **28.12.2011**
(21) Anmeldenummer: 08010049.8
(22) Anmeldetag: 02.06.2008
(51) Int. Cl.: E06B 5/12, E06B 9/02

(54) **Absturzsicherung**
Crash protection
Equipement de protection contre les chutes

(43) Veröffentlichungstag der Anmeldung: 09.12.2009
(60) Teilanmeldung: 09011632.8
(73) Patentinhaber: Feigl, Bernhard, 6911 Lochau (AT)
(72) Erfinder: Feigl, Bernhard, 6911 Lochau (AT)
(74) Vertreter: Engelhardt, Volker

(56) Entgegenhaltungen:
- CA-A1- 975 343
- DE-A1- 19 741 788
- DE-U1- 20 307 778
- DE-U1- 29 612 013
- DE-U1-202005 001 299
- FR-A1- 2 506 446
- US-A1- 2003 089 052
- US-A1- 2007 290 106
- US-B1- 6 216 401

## Beschreibung

Die Erfindung bezieht sich auf eine Absturzsicherung nach dem Oberbegriff des Patentanspruches 1 und 6.

Der DE 10 2004 023 143 A1 ist eine Befestigungsvorrichtung aus Metall zu entnehmen, durch die eine Platte, insbesondere eine Glasplatte, an einem Mauerwerk abgestützt werden soll. Die Befestigungsvorrichtung besteht dabei aus zwei senkrecht zueinander und fest miteinander verbundenen Basisplatten in die jeweils eine oder mehrere Langlöcher eingearbeitet sind. Die Glasplatte weist eine oder mehrere Durchgangsbohrungen auf, die fluchtend zu den Langlöchern ausgerichtet werden, so dass die Glasplatte an einer der Basisplatten mittels Befestigungsschrauben gehalten ist. Die andere Basisplatte der Befestigungsvorrichtung wird mittels Befestigungsschrauben an dem Mauerwerk abgestützt.

Als nachteilig bei der bekannt gewordenen Befestigungsvorrichtung nach dem Stand der Technik hat sich herausgestellt, dass die Glasplatte und die Befestigungsvorrichtung starr, also unbeweglich, an dem Mauerwerk angebracht sind. Erschütterungen, insbesondere Krafteinwirkungen, die senkrecht zu dem Mauerwerk und der Platte verlaufen, werden ungedämpft von der Glasplatte an die Befestigungsvorrichtung und damit an das Mauerwerk weitergeleitet. Wenn demnach die horizontal verlaufenden Krafteinwirkungen auf die Glasplatte derart ansteigen, dass diese von der Befestigungsvorrichtung und den Befestigungsschrauben nicht mehr aufgenommen werden können, bricht die Befestigungsvorrichtung oder die Befestigungsschrauben werden aus ihren Bohrungen gerissen. Dies hat jedoch zur Folge, dass die Glasplatte nicht mehr zuverlässig an dem Mauerwerk befestigt ist und somit herunterfällt. Dabei können Personen verletzt werden.

Des Weiteren wird durch die Zerstörung der Befestigungsvorrichtung und das Herunterfallen der Glasplatte der Durchgangsbereich freigegeben, der üblicherweise von der Glasplatte verschlossen ist, um beispielsweise als Geländerbrüstung an einem Balkon oder an einer nach außen führenden Türöffnung als Absturzsicherung zu wirken. Dies führt somit zu einem weiteren Gefahrenpotenzial, denn die oftmals von Menschen aufgebrachten Kräfte, durch die die Befestigungsvorrichtung zerstört werden kann, führt beim Absturz der Glasplatte auch dazu, dass die kraftaufbringenden Personen möglicherweise zusammen mit der Glasplatte herunterfallen.

Darüber hinaus ist es auch denkbar, dass die horizontal auf die Glasplatte einwirkenden Kräfte impulsweise auftreten und folglich über eine längere Zeitdauer aufgrund von Schwingungen die Verbindung zwischen den Gewinden in dem Mauerwerk und der Befestigungsschraube bzw. zwischen den Gewinden in der Befestigungsvorrichtung und den Befestigungsschrauben ausschlagen und auch dadurch die mechanische Befestigung gelöst wird.

Aus der DE 20 2005 001 299 U1 ist zu entnehmen, dass ein Blend- und ein Flügelrahmen in einem Mauerwerk eingesetzt sind. Zwischen diesen sind zur Erzeugung einer Polsterung ein oder mehrere Pakete von Tellerfedern angeordnet. Durch diese soll insbesondere eine von außen auf den Flügelrahmen einwirkende Detonationskraft vor dem Blendrahmen gedämpft werden, um Beschädigungen an dem Blendrahmen zu verhindern.

Durch diese konstruktive Ausgestaltung wird eine Relativbewegung, um die Bewegungsenergien abzubauen, an einer Absturzsicherung nicht erreicht, denn der Blendrahmen ist fest im Mauerwerk eingebaut und der durch die Tellerfederpakete gedämpft gelagerte Flügelrahmen soll die von außen auftreffende Detonationsenergie aufnehmen und an die Tellerfederpakete übertragen. Bei einer Absturzsicherung wird jedoch unmittelbar auf die die Glasplatte aufnehmenden U-Profilschienen eine Kraft bzw. ein Drehmoment eingeleitet, wenn nämlich auf die Glasplatten entsprechende Kräfte einwirken, die von den Profilschienen abzustützen sind.

Es ist daher Aufgabe der Erfindung, eine Absturzsicherung der eingangs genannten Gattung zur Verfügung zu stellen, die zum Einen zuverlässig an einem Mauerwerk eines Gebäudes angebracht werden kann und durch die zum Anderen die auf diese einwirkenden Energien in Form von Kräften und Drehmomenten derart aufgenommen werden, dass diese gedämpft und somit reduziert an das Mauerwerk weitergeleitet sind. Durch die erfindungsgemäße Absturzsicherung soll demnach ein Energieabbau der auf die Glasplatte einwirkenden Kräfte oder Drehmomente gewährleistet sein.

Diese Aufgabe wird erfindungsgemäß durch die Merkmale des kennzeichnenden Teils von Patentanspruch 1 und 6 gelöst.

Weitere vorteilhafte Weiterbildungen der Erfindung ergeben sich aus den Unteransprüchen.

Dadurch, dass zwischen der die Platte abstützenden U-Profilschienen und den vier Aufnahmekörpern, die an dem Mauerwerk über Befestigungsschrauben gehalten sind, ein Dämpfungselement angeordnet ist, das sowohl im Bereich der Profilschiene als auch im Bereich des Aufnahmekörpers relativ zu diesen beweglich gelagert ist, können die auf die Platte einwirkenden Kräfte und Drehmomente gedämpft werden. Durch das Dämpfungselement nach Anspruch 1 werden die von der Glasplatte aufgenommenen Kräfte und Drehmomente derart übertragen, dass sich die Glasplatte parallel zu dem Mauerwerk anhebt und somit eine Umwandlung der Kraftrichtung, die zunächst horizontal, also senkrecht auf die Platte, einwirkt, um durch die Lagerung der Dämpfungselemente in eine vertikal, also parallel zu dem Mauerwerk verlaufende, Kraft umgelenkt zu werden.

In der Zeichnung sind zwei erfindungsgemäße Ausführungsbeispiele dargestellt, die nachfolgend näher erläutert werden. Im Einzelnen zeigt:
- Figur 1: ein erstes Ausführungsbeispiel einer Absturzsicherung zur Halterung einer Platte, mit vier an dem Mauerwerk fest angebrachten Aufnahmekörpern, in die ein S-förmig ausgestaltetes Dämpfungselement eingesetzt ist, durch das zwei fest mit der Platte verbundenen U-Profilschienen abgestützt ist, im Schnitt und im unbelasteten Zustand,
- Figur 2: die Absturzsicherung gemäß Figur 1 im belasteten Zustand,
- Figur 3a: ein zweites Ausführungsbeispiel einer Absturzsicherung zur Halterung einer Platte, mit vier als U-Profil ausgestaltete Aufnahmekörpern in die drehbar ein Befestigungsbolzen eingesetzt ist, an dem ein I-förmiger Haltekörper verschwenkbar an dem Befestigungsbolzen angebracht ist, und mit einer an der Platte befestigten U-Profilschiene, an die eine Aufnahmetasche angeformt ist, in die der Haltekörper verschwenkbar eingesetzt ist, im Schnitt und im unbelasteten Zustand,
- Figur 3b: die Absturzsicherung gemäß Figur 3a, in Draufsicht,
- Figur a: die Absturzsicherung gemäß Figur 3a im belasteten Zustand und
- Figur 4b: die Absturzsicherung gemäß Figur 3b im belasteten Zustand.

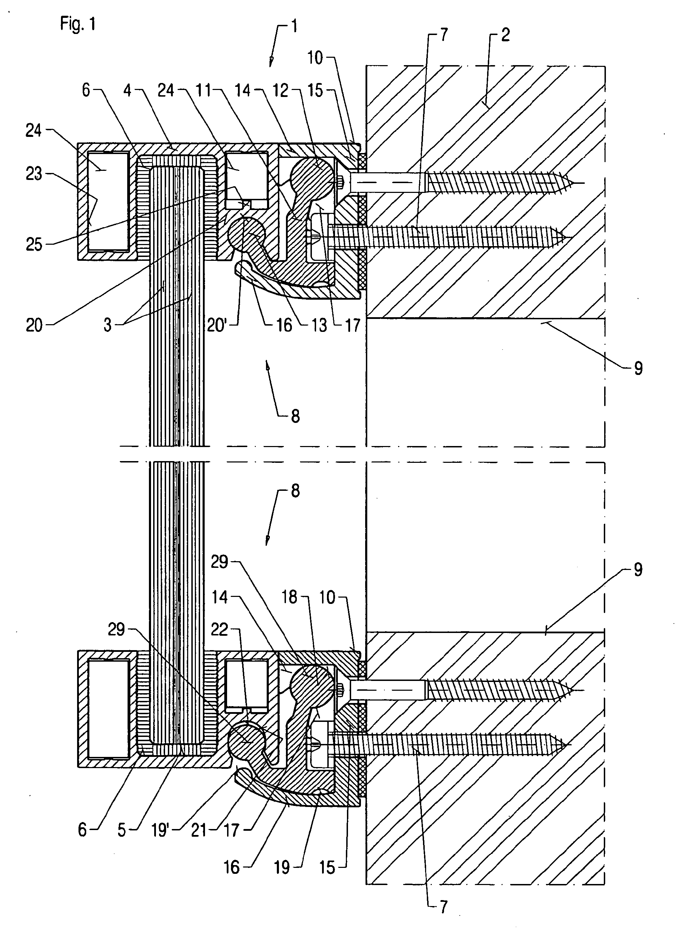

Den Figuren 1 bis 4b kann eine Absturzsicherung 1 entnommen werden, durch die eine in einem Mauerwerk 2 vorhandene Türöffnung 9 ganz oder zumindest teilweise abgedeckt ist, um zu verhindern, dass Personen, Tiere, Gegenstände oder dgl. aus der Türöffnung 9 herausfallen können. Um ein ästhetisch ansprechendes Erscheinungsbild für die Absturzsicherung 1 zu erreichen, besteht diese aus zwei miteinander verbundenen Glasplatten 3, die als Sicherheitsglas ausgebildet sind. Gegebenenfalls können die Glasplatten 3 ganz oder teilweise emailliert sein, um eine Sichtschutzwand zu erzeugen.

Den einzelnen Ausführungsbeispielen der Figuren 1 bis 4b ist gemeinsam, dass die beiden Glasplatten 3 in zwei zueinander parallel verlaufenden U-Profilschienen 4 und 5 mittels einer Klebeschicht 6 arretiert sind. An dem Mauerwerk 2 werden, wie dies nachfolgend noch näher erläutert wird, unterschiedlich ausgestaltete Aufnahmekörper 8 mittels Befestigungsschrauben 7 angebracht. Die Aufnahmekörper 8 können vorzugsweise mit der U-Profilschiene 4 ausschließlich verbunden sein und die Profilschiene 5 wird starr an dem Mauerwerk 2 oder einem Fensterstockrahmen befestigt. Die beiden U-Profilschienen 4 und 5 stehen mit den jeweiligen Aufnahmekörpern 8 in kraftschlüssiger Wirkverbindung. Diese Wirkverbindung ist jedoch derart konstruktiv unterschiedlich ausgestaltet, dass bei einer horizontal belasteten Glasplatte 3 eine Dämpfung durch eine Umwandlung der auf die Glasplatte 3 einwirkenden Kräfte erfolgt.

Die Platte 3 weist eine rechteckförmige Kontur auf; die Aufnahmekörper 8 sind dabei den vier Eckbereichen der Platte 3 zugeordnet.

Der Figur 1 kann nunmehr entnommen werden, dass die Absturzsicherung 1 über ein S-förmig ausgestaltetes Dämpfungsglied 11, das in dem Aufnahmekörper 8 und in der jeweiligen Profilschiene 4 oder 5 angeordnet ist, gehalten ist.

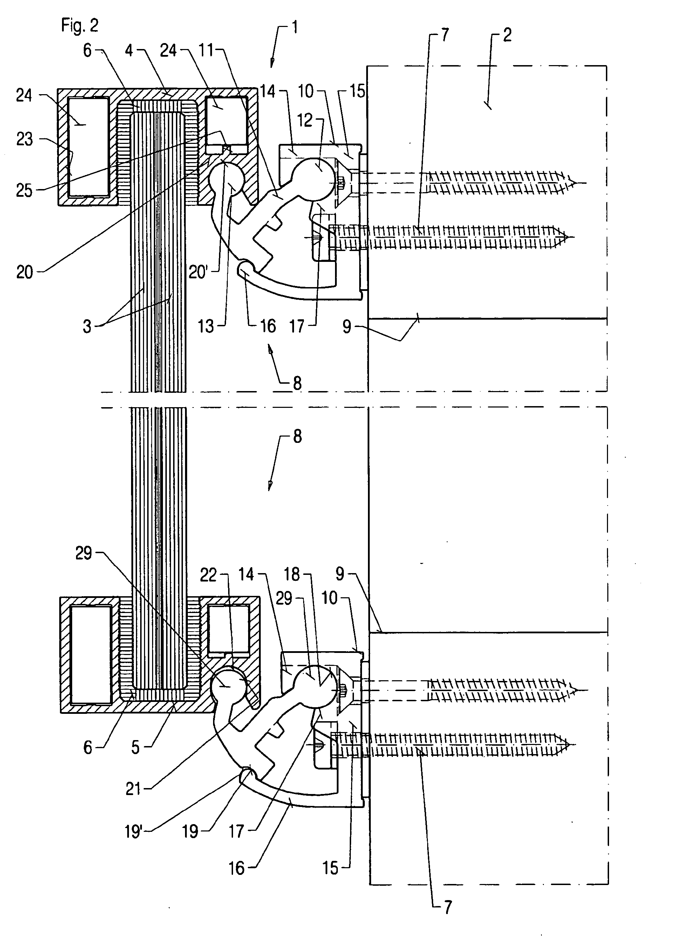

Der Aufnahmekörper 8 nach den Figuren 1 und 2 ist dabei im Querschnitt als U-Profil 10 ausgestaltet. Das U-Profil 10 besteht aus einer Grundplatte 15, die dem Mauerwerk 2 zugewandt und über die Befestigungsschrauben 7 mit diesem verbunden ist. Folglich ist das U-Profil 10 in Richtung der Glasplatte 3 und der jeweiligen U-Profilschiene 4 bzw. 5 offen. Ein erster Schenkel 14, der senkrecht von der Grundplatte 15 absteht, ist L-förmig ausgebildet, so dass durch das freie Ende des ersten Schenkels 14 eine Hinterschneidung entsteht. Die Innenkontur des L-förmigen ersten Schenkels 14 weist eine kreisförmige Innenkontur auf. Etwa zentrisch zu der Grundplatte 15 ist an dieser eine in Richtung des ersten Schenkels 14 ausgerichtete Anformung 17 angearbeitet, die zusammen mit der Innenkontur des ersten Schenkels 14 eine dreiviertelkreisförmige Haltenut 18 bildet.

Der zweite an der Grundplatte 15 abstehende Schenkel 16 ist in seinem Querschnitt bogenförmig ausgestaltet. Die derart erzeugte Rundung des zweiten Schenkels 16 steigt in Richtung der jeweiligen Profilschiene 4 oder 5 an. An der Profilschiene 4 und 5 sind seitlich neben der Glasplatte 3 eine Anformung 20 vorgesehen, in die eine parallel zu der Glasplatte 3 verlaufende Aufnahmenut 20' mit einem kreisförmigen Querschnitt eingearbeitet ist.

Die erste freie Stirnseite 12 des S-förmigen Dämpfungselementes 11 ist dabei in die Haltenut 18 eingeschoben und die zweite Stirnseite 13 des Dämpfungselementes 11 in die Aufnahmenut 20'. Die beiden Stirnseiten 12 und 13 sind dabei in ihrem Querschnitt kreisförmig ausgestaltet und können somit räumlich betrachtet als Kugel 29 oder als kugelförmige Schiene ausgebildet sein. Die erste Stirnseite 12 liegt dabei im Bereich der Innenseite der Anformung 17 auf dieser an und wird folglich durch diese abgestützt. Durch die zweite freie Stirnseite 13 wird die Profilschiene 4 oder 5 in vertikaler Richtung gehalten. Die niveauniedrigere U-Profilschiene 5 weist dabei eine Aufnahmenut 20' auf, die als Langloch 21 ausgebildet ist, so dass im montierten und unbelasteten Zustand gemäß Figur 1 zwischen der freien Stirnseite 12 und dem Boden des Langloches 21 ein Luftspalt 22 vorhanden ist. Dieses Langloch 21 ist als Montagehilfe anzusehen, denn bei der Fertigung der Profilschienen 4 und 5 treten Fehlertoleranzen auf, die durch das Langloch 21 ausgleichbar sind.

Des Weiteren liegt das Dämpfungselement 11 auf der Innenseite des bogenförmig ausgestalteten zweiten Schenkels 16 auf. Durch die vorhandene Dreipunktlagerung, nämlich die Arretierung der ersten freien Stirnseite 12 in der Haltenut 18, der Anbringung der zweiten Stirnseite 13 in der Aufnahmenut 20' der jeweiligen U-Profilschiene 4 oder 5 und der Auflage zwischen dem zweiten bogenförmigen Schenkel 16 und der diesem zugewandte Oberfläche des Dämpfungselementes 11 wird die U-Profilschiene 4 und 5 und damit die Glasplatten 3 zuverlässig in dem U-Profil 10 gehalten.

Der Figur 2 kann entnommen werden, wie die Glasplatte 3 angehoben wird, wenn auf diese vertikale Kräfte einwirken. Aufgrund der geometrischen Ausgestaltung der beiden freien Stirnseiten 12 und 13 des Dämpfungselementes 11 sind nämlich Relativbewegungen zwischen dem Dämpfungselement 11 und dem ersten Schenkel 14 in der Haltenut 18 und innerhalb der Aufnahmenut 20' der jeweiligen U-Profilschiene 4 oder 5 möglich. Die vertikalen Kräfte, die auf die Glasplatte 3 einwirken, führen demnach dazu, dass die Glasplatte 3 zusammen mit den beiden U-Profilschienen 4 und 5 aus der Ruhestellung in eine niveauhöhere Position überführt wird. Das Dämpfungselement 11 wird dabei durch den bogenförmig ausgestalteten zweiten Schenkel 16 der demnach als Führungselement wirkt, angehoben. Somit wird durch die bogenförmige Ausgestaltung des zweiten Schenkels 16 die auf die Glasplatte 3 einwirkenden Kräfte abgefedert und in ihrer Richtung um 90° nach oben, also in Richtung der bogenförmigen Ausgestaltung des zweiten Schenkels 16 umgewandelt. Es ist dabei vorstellbar, dass die Innenkontur des zweiten Schenkels 16 unterschiedliche Radien aufweist, die in Richtung der U-Profilschiene 4 oder 5 verkleinert werden, so dass sich die Neigung des zweiten Schenkels 16 in Richtung der U-Profilschiene 4 und 5 aus der Waagrechten in einen vertikalen Verlauf verändert.

In die den zweiten Schenkel 16 zugewandte Oberfläche des Dämpfungselementes 11 ist eine Freisparung 19 eingearbeitet, die, wie dies in Figur 2 dargestellt ist, in eine an dem freien Ende des Schenkels 16 angebrachte Anformung 19' einschnappt und durch diese arretiert wird. Somit wird verhindert, dass das Dämpfungselement 11 zwischen den beiden Schenkeln 14 und 16 herausrutscht, wenn entsprechend hohe Kräfte auf die Glasplatte 3 einwirken.

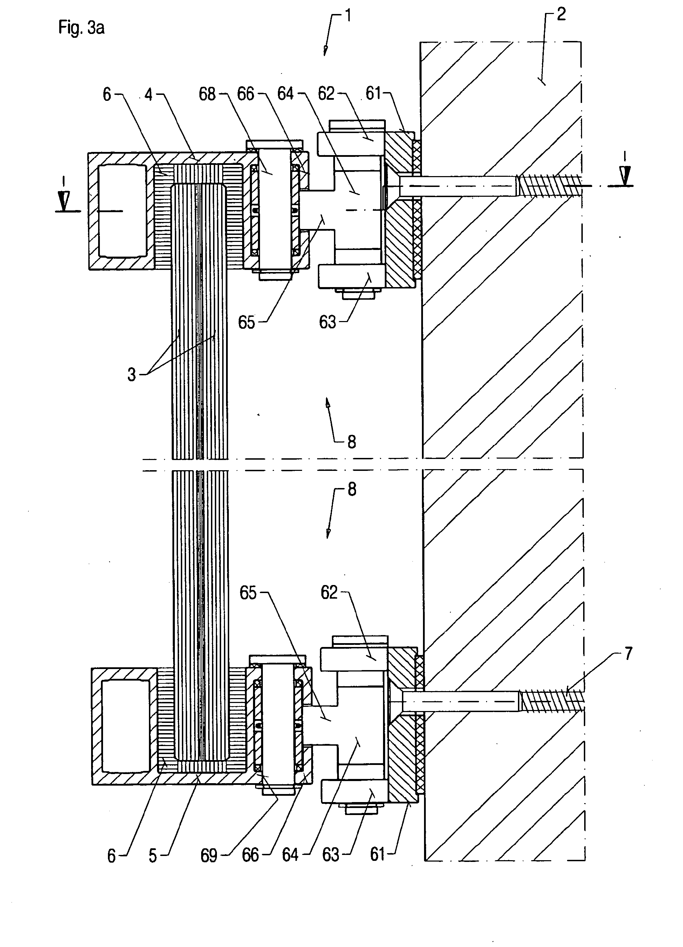

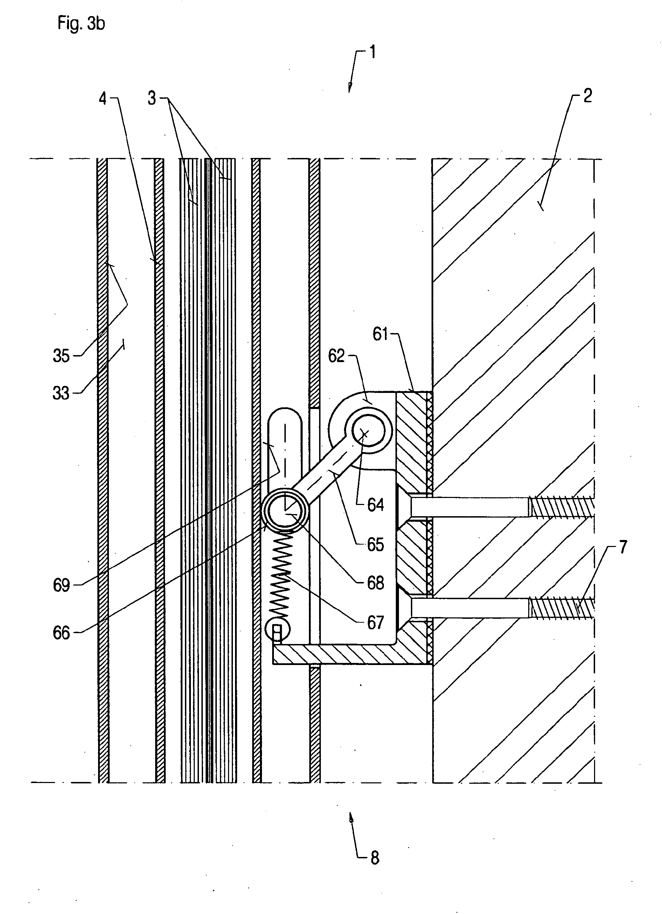

Den Figuren 3a bis 4b liegt eine weitere konstruktiv andersartige Ausgestaltung der erfindungsgemäßen Absturzsicherung 1 zugrunde. Das Zwischenglied 61 des Aufnahmekörpers 8 ist dabei als U-förmige Platte ausgestaltet. Die beiden parallel zueinander verlaufenden ersten und zweiten Schenkel 62 und 63 der Platte 61 sind in Richtung der U-Profilschienen 4 und 5 ausgerichtet. Die die beiden Schenkel 62 und 63 verbindende Grundplatte ist über die Befestigungsschrauben 7 fest mit dem Mauerwerk 2 verbunden. Zwischen den beiden Schenkeln 62 und 63 ist ein Befestigungsbolzen 64 drehbar eingesteckt, an dem ein I-förmiger Haltekörper 65 verschwenkbar abgestützt ist. Der I-förmige Haltekörper 65 ragt daher in Richtung der jeweiligen U-Profilschiene 4 und 5 und ist an dieser mittels eines Befestigungsbolzens 64 und 68 in einer an der jeweiligen Profilschiene 4 und 5 angeformten Aufnahmetasche 66 verschwenkbar gehalten.

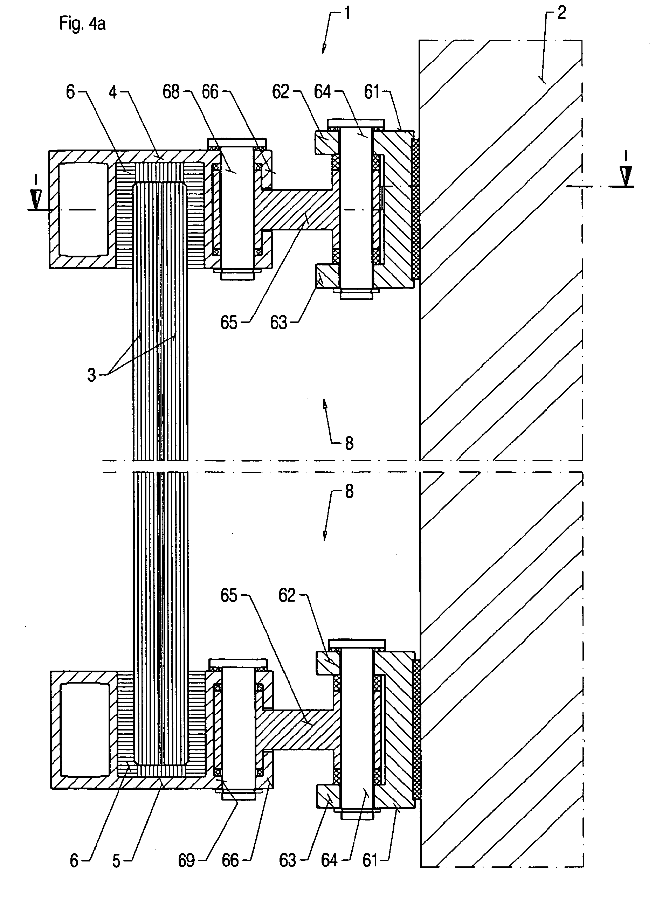

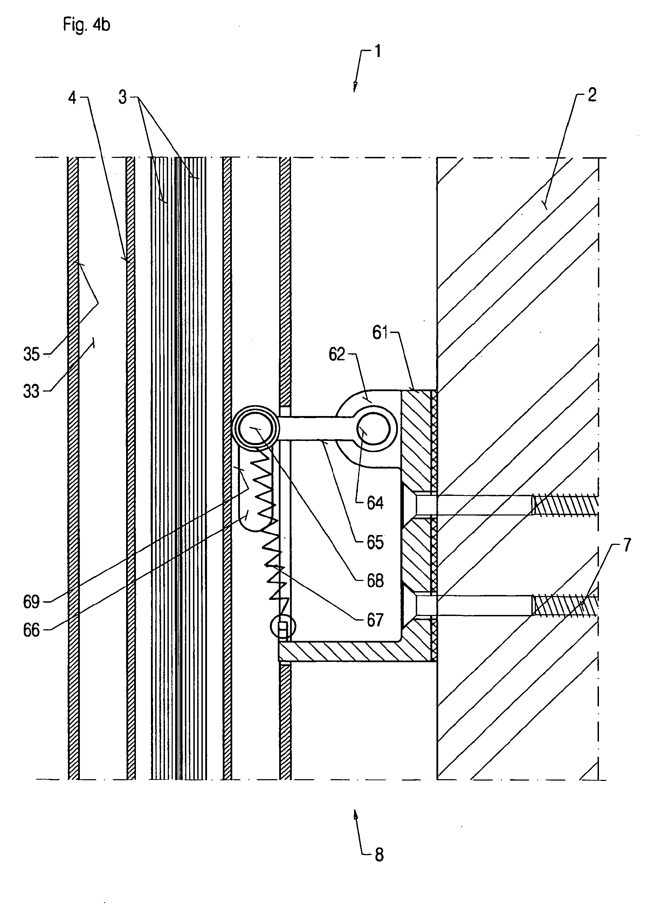

Insbesondere der Figur 4b kann entnommen werden, dass die Senkrecht zur Platte auftretenden Kräfte, die möglicherweise auf die Glasplatte 3 einwirken, gedämpft werden, in dem die Glasplatte 3 aus ihrer in den Figuren 7a und 7b gezeigten Ruhestellung in eine Seitlich vershobene Position überführt wird. Dies erfolgt dadurch, dass der Haltekörper 65 in der Aufnahmetasche 66 in einem Langloch 69 verfahrbar gehalten ist. Die Kräfte Senkrecht zur Platte führen demnach dazu, dass sich die Befestigungsbolzen und der I-förmige Haltekörper 65 drehen und gleichzeitig der Befestigungsbolzen 68 und somit das freie Ende des Haltekörpers 65 aus der Ruheposition in eine niveauhöhere Stellung überführt werden. Um diese Bewegung zu dämpfen, ist zwischen dem Befestigungsbolzen 68 und der U-förmigen Platte 61 eine Feder 67 angeordnet, durch die die entsprechend auftretenden Kräfte aufgenommen wird.

Den Figuren 1 bis 4b ist gemeinsam, dass die U-Profilschienen 4 und 5 einen rechteckförmigen Hohlraum 23 einschließen, der seitlich neben der Glasplatte 3 verläuft. In dem Hohlraum ist jeweils ein Stützkörper 24 eingesetzt, durch den die jeweilige U-Profilschiene 4 und 5 versteift ist, um zusätzliche Torsionsmomente oder sonstige Kräfte aufnehmen zu können.

## Patentansprüche

1. Absturzsicherung (1), durch die eine Platte (3), insbesondere eine Glasplatte, an einem Mauerwerk (2) oder an einem Fensterstockrahmen eines Gebäudes gehalten ist, mit mindestens einem vorzugsweise den Eckbereichen der Platte (3) zugeordneten Aufnahmekörper (8), der bzw. die an dem Mauerwerk (2) angebracht ist bzw. sind, und mit mindestens zwei an der Platte (3) arretierten U-Profilschienen (4, 5), die parallel zueinander verlaufen und die über als Dämpfungselemente ausgebildete Zwischenglieder (10, 11) an dem jeweiligen Aufnahmekörper (8) abgestützt sind,
**dadurch gekennzeichnet,**
**dass** die Dämpfungselemente zu dem jeweiligen Aufnahmekörper (8) und der U-Profilschiene (4, 5) relativ bewegbar gelagert sind, dass der Aufnahmekörper (8) aus einem U-Profil (10) mit einer dem Mauerwerk (2) zugewandten und an dieser vorzugsweise über Befestigungsschrauben (7) gehaltenen Grundplatte (15) und zwei an dieser angeformten Schenkeln (14, 16) besteht, dass der erste und im montierten Zustand niveauhöher angeordnete Schenkel (14) des U-Profils (10) L-förmig ausgebildet ist, dass im Bereich der Grundplatte (15) eine zwischen den beiden Schenkeln (14, 16) verlaufende Anformung (17) vorgesehen ist, die zusammen mit dem ersten Schenkel (14) eine Haltenut (18) bildet, dass der zweite Schenkel (16) des U-Profils (10) eine bogenförmige Querschnittskontur aufweist, dessen freies Ende in Richtung des ersten Schenkels (14) ausgerichtet ist, dass das Dämpfungselement (11) in die Haltenut (18) eingeführt ist und dass das Dämpfungselement (11) auf den zweiten Schenkel (16) ganz oder bereichsweise aufliegt.

2. Abstützvorrichtung nach Anspruch 1 ,
**dadurch gekennzeichnet,**
**dass** das Dämpfungselement (11) eine S-förmige Querschnittskontur aufweist und dass an einer ersten freien Stirnseite (12) des Dämpfungselementes (11) eine im Querschnitt kreisförmig ausgebildete Schiene oder Kugel (29) angeformt ist, deren Außenkontur an die Innenkontur der Haltenut (18) des U-Profils (10) angepasst und in dieser im Bereich der Anformung (17) und der Innenseite des ersten Schenkels (14) gehalten ist.

3. Absturzsicherung nach Anspruch 2,
**dadurch gekennzeichnet,**
**dass** an einer zweiten freien Stirnseite (13) des Dämpfungselementes (11) eine im Querschnitt kreisförmig ausgebildete Schiene oder Kugel (29) angeformt ist, dass die U- Profilschiene (4, 5) eine in Richtung der zweiten Stirnseite (13) des Dämpfungselementes (11) ausgerichtetes Ansatzstück (20) aufweist, in das eine U-förmige Aufnahmenut (20') eingearbeitet ist, deren Innenkontur an die Außenkontur der zweiten Stirnseite (13) des Dämpfungselementes (13) angepasst und in diese eingesetzt ist.

4. Absturzsicherung nach Anspruch 3,
**dadurch gekennzeichnet,**
**dass** eine der Aufnahmenuten (20) der beiden U-Profilschienen (4, 5), vorzugsweise die im montierten Zustand niveauniedrigere, als Langloch (21) ausgebildet ist und dass zwischen der zweiten Stirnseite (13) des Dämpfungselementes (11) und dem Boden des Langloches (21) ein Luftspalt (22) im montierten Zustand der U-Profilschiene (5) an dem U-Profil (10) vorhanden ist.

5. Absturzsicherung nach Anspruch 3 oder 4,
**dadurch gekennzeichnet,**
**dass** in die dem zweiten Schenkel (16) zugewandte Oberfläche des Dämpfungselementes (11) eine Freisparung (19) eingearbeitet ist und dass an das freie Ende des zweiten Schenkels (16) eine Anformung (19') angeformt ist, deren Außenkontur zur Halterung der Freisparung (19) an deren Innenkontur angepasst ist.

6. Absturzsicherung (1), durch die eine Platte (3), insbesondere eine Glasplatte, an einem Mauerwerk (2) oder an einem Fensterstockrahmen eines Gebäudes gehalten ist, mit mindestens einem vorzugsweise den Eckbereichen der Platte (3) zugeordneten Aufnahmekörper (8), die an dem Mauerwerk (2) angebracht sind, und mit mindestens zwei an der Platte (3) arretierten U-Profilschienen (4, 5), die parallel zueinander verlaufen und die über als Dämpfungselemente ausgebildete Zwischenglieder (61, 64, 65, 66) an dem jeweiligen Aufnahmekörper (8) abgestützt sind,
**dadurch gekennzeichnet,**
**dass** die Dämpfungselemente zu dem jeweiligen Aufnahmekörper (8) und der U-Profilschiene (4, 5) relativ bewegbar gelagert sind, dass das Zwischenglied (61) des Aufnahmekörpers (8) als U-förmige Platte ausgestaltet ist, dass zwischen den zwei parallel und beabstandeten zueinander verlaufenden Schenkeln (62, 63) der Platte (61) ein Befestigungsbolzen (64) drehbar angebracht ist, dass an dem Befestigungsbolzen (64) ein I-förmig ausgestalteter Haltekörper (65) verschwenkbar an diesem befestigt ist, dass an der U-Profilschiene (4, 5) eine U-förmige Aufnahmetasche (66) angeformt ist, in die der Haltekörper (65) eingeschoben ist und dass der Haltekörper (65) durch einen Befestigungsbolzen (68) in der Aufnahmetasche (66) der U-Profilschiene (4, 5) drehbar gehalten ist.

7. Absturzsicherung nach Anspruch 6,
**dadurch gekennzeichnet,**
**dass** zwischen dem Aufnahmetasche (66) und dem freien Ende des Haltekörpers (65), das in der U-Profilschiene (4, 5) angeordnet ist, eine Feder (67) angebracht ist.

8. Absturzsicherung nach einem der vorgenannten Ansprüche,
**dadurch gekennzeichnet,**
**dass** seitlich neben der Platte (3) ein an der U-Profilschiene (4, 5) angebrachter rechteckförmiger Hohlraum (23) vorgesehen ist und dass in den Hohlraum (23) jeweils ein an dessen Innenkontur angepasstes Stützelement (30) eingesetzt ist.

9. Absturzsicherung nach Anspruch 8,
**dadurch gekennzeichnet,**
**dass** an der Innenwand des jeweiligen Hohlraumes (23) eine vorzugsweise T-förmig ausgestaltete Führungsschiene (26) angeformt ist, die fluchtend und/oder senkrecht zueinander verlaufen, und dass auf der jeweiligen freien Stirnseite der Führungsschiene (26) das Stützelement (30) aufliegt.

10. Absturzsicherung nach einem der vorgenannten Ansprüche,
**dadurch gekennzeichnet,**
**dass** jeweils zwei benachbarte Aufnahmekörper (8) fluchtend zueinander angeordnet sind.

## Claims

1. A crash protection (1) by means of which a panel (3), in particular a pane of glass, is held against a masonry wall (2) or a window frame of a building, with at least one holding body (8) preferably allocated to the corner areas of the panel (3), which is or are attached to the masonry wall (2), and with at least two U-section rails (4, 5) locked onto the panel (3) running in parallel with one another and supported on the corresponding holding body (8) by means of intermediate elements (10, 11) configured as damping elements,
**characterised in that,**
the damping elements are mounted so as to be moveable relative to the corresponding holding body (8) and the U-section rail (4, 5), that the holding body (8) consists of a U-section (10) with a base plate (15) facing the masonry wall (2) and held on it preferably by means of retaining screws (7) and two legs (14, 16) formed on the base plate (15), that the first leg (14) of the U-section (10) which is arranged on a higher level in the installed condition has an L-shaped cross section, that a shaped piece (17) is provided in the area of the base plate (15) running between the two legs (14, 16) and the shaped piece (17) forms a retaining groove (18) together with the first leg (14), that the second leg (16) of the U-section (10) has an arc-shaped cross-sectional contour, the free end of which is aligned in the direction of the first leg (14), that the damping element (11) is inserted into the holding groove (18) and that the damping element (11) is in full or partial contact with the second leg (16).

2. A support device in accordance with Claim 1,
**characterised in that,**
the damping element (11) has an S-shaped cross-sectional contour and that a rail with a circular cross section or a ball (29) is formed on a first free end (12) of the damping element (11), the outside contour of which ball (29) is adapted to the inside contour of the retaining groove (18) of the U-section (10) and is held in this section in the area of the shaped piece (17) and inside of the first leg (14).

3. The crash protection in accordance with Claim 2,
**characterised in that,**
a rail with a circular cross section or a ball (29) is formed on a second free end (13) of the damping element (11), that the U-section rail (4, 5) has an attachment (20) aligned in the direction of the second end (13) of the damping element (11), with a U-shaped holding groove (20') worked into the attachment (20) and the inner contour of the groove (20') adapted to the second end (13) of the damping element (11) and inserted in it.

4. The crash protection in accordance with Claim 3,
**characterised in that,**
one of the holding grooves (20) of the two U-section rails (4, 5), and preferably the one on the lower level in the installed condition, is configured as a slot (21) and that there is a gap (22) between the second end (13) of the damping element (11) and the base of the slot (21) when the U-section rail (5) is installed on the U-section (10).

5. The crash protection in accordance with Claim 3 or 4,
**characterised in that,**
the surface of the damping element (11) facing the second leg (16) has a recess (19) worked into it, and that a shaped piece (19') is formed onto the free end of the second leg (16), the outer contour of which shaped piece (19') is adapted to the inner contour of the recess (19) in order to provide a hold.

6. A crash protection (1) by means of which a panel (3), in particular a pane of glass, is held against a masonry wall (2) or a window frame of a building, with at least one holding body (8) preferably allocated to the corner areas of the panel (3), which are attached to the masonry wall (2), and with at least two U-section rails (4, 5) locked onto the panel (3) running in parallel with one another and supported on the corresponding holding body (8) by means of intermediate elements (61, 64, 65, 66) configured as damping elements,
**characterised in that,**
the damping elements are mounted so as to be moveable relative to the corresponding holding body (8) and the U-section rail (4, 5), that the intermediate element (61) of the holding body (8) is configured as a U-shaped panel, that a retaining pin (64) is attached in a rotating arrangement between the two legs (62, 63) of the panel (61) running in parallel and spaced apart from one another, that an I-shaped holding body (65) is attached on the retaining pin (64) in a swivelling arrangement, that a U-shaped holding pocket (66) is formed onto the U-section rail (4, 5) with the holding body (65) pushed into the pocket (66) and that the holding body (65) is held in a rotating arrangement in the holding pocket (66) of the U-section rail (4, 5) by a retaining pin (68).

7. The crash protection in accordance with Claim 6,
**characterised in that,**
a spring (67) is attached between the holding pocket (66) and the free end of the holding body (65) that is arranged in the U-section rail (4, 5).

8. The crash protection in accordance with one of the aforementioned claims,
**characterised in that,**
a rectangular void (23) attached to the U-section rail (4, 5) is provided on the side adjacent to the panel (3) and that a support element (30) adapted to the inner contour of the void (23) is inserted into the void (23).

9. The crash protection in accordance with Claim 8,
**characterised in that,**
a guide rail (26) preferably with a T-shaped configuration is formed on the inner wall of each void (23) and the rails (26) run in alignment and/or at right angles with one another, and that the support element (30) makes contact on the corresponding free end of the guide rail (26).

10. The crash protection in accordance with one of the aforementioned claims,
**characterised in that,**
two adjacent holding bodies (8) are arranged in alignment with one another.

## Revendications

1. Protection de chute (1), permettant de retenir une plaque (3), en particulier une plaque de verre, sur un murage (2) ou sur un cadre de dormant d'un bâtiment, avec au moins un corps de logement (8) assigné de préférence aux coins de la plaque (3), qui est fixé (qui sont fixés) sur le murage (2), et avec au moins deux glissières parallèles en profil en U (4, 5) retenues sur la plaque (3) et qui, à l'aide d'éléments intermédiaires (10, 11) conçus en tant qu'éléments amortissants, s'appuient sur le corps de logement (8) respectif,
**caractérisée en ce que**
les éléments amortissants sont logés de manière mobile par rapport au corps de logement respectif (8) et par rapport à la glissière de profil en U (4, 5), que le corps de logement (8) consiste d'un profil en U (10) avec une plaque de base (15) donnant sur le murage et fixée sur celui-ci de préférence par des boulons de fixation (7) et de deux bras (14, 16) formés sur celle-ci, que le premier bras (14) du profil en U (10) qui, en état monté, est placé plus haut, est conçu en forme d'un L, qu'au niveau de la plaque de base (15), il est prévu une forme (17) s'étendant entre les deux bras (14, 16) et qui, ensemble avec le premier bras (14), représente un gorge de retient (18), que le deuxième bras (16) du profil en U (10) possède un contour de section en arc, dont l'extrémité libre donne en direction du premier bras (14), que l'élément amortissant (11) est introduit dans la gorge de retient (18) et que l'élément amortissant (11) porte partiellement ou entièrement sur le deuxième bras (16).

2. Protection de chute d'après la revendication 1,
**caractérisée en ce que**
l'élément amortissant (11) possède un contour de section en S et que, sur une première face frontale libre (12) de l'élément amortissant (11), il est formé une glissière à section circulaire ou une bille (29) dont le contour extérieur correspond au contour intérieur de la gorge de retient (18) du profil en U (10) et qui est retenue dans celle-ci au niveau de la forme (17) et de la face intérieure du premier bras (14).

3. Protection de chute d'après la revendication 2,
**caractérisée en ce que**
sur une deuxième face frontale libre (13) de l'élément amortissant (11), il est formé une glissière à section circulaire ou une bille (29), que la glissière à profil en U (4, 5) comporte un embout (20) donnant en direction de la deuxième face frontale (13) de l'élément amortissant (11) et dans lequel il est pratiqué une gorge de logement en forme de U (20') dont le contour intérieur est adapté au contour extérieur de la deuxième face frontale (13) et qui est inséré dans celui-ci.

4. Protection de chute d'après la revendication 3,
**caractérisée en ce que**
une des gorges de logement (20) des deux glissières à profil en U (4, 5), de préférence celle qui, en état monté, est la plus basse, est conçue en tant que trou oblong (21) et qu'entre la deuxième face frontale (13) de l'élément amortissant (11) et le fond du trou oblong (21), il y a un interstice (22) quand la glissière à profil en U (5) est montée sur le profil en U (10).

5. Protection de chute d'après les revendications 3 ou 4,
**caractérisée en ce que**
dans la surface de l'élément amortissant (11) donnant sur le deuxième bras (16), il est pratiqué un évidement (19) et que sur l'extrémité libre du deuxième bras (16) il est prévu une forme (19') dont le contour extérieur est adapté au contour intérieur de l'évidement (19) pour retenir ce dernier.

6. Protection de chute (1), permettant de retenir une plaque (3), en particulier une plaque de verre, sur un murage (2) ou sur un cadre de dormant d'un bâtiment, avec au moins un corps de logement (8) assigné de préférence aux coins de la plaque (3), qui sont fixés sur le murage (2), et avec au moins deux glissières parallèles de profil en U (4, 5) retenues sur la plaque (3) et qui, à l'aide d'éléments intermédiaires (61, 64, 65, 66) conçus en tant qu'éléments amortissants, s'appuient sur le corps de logement (8) respectif,
**caractérisée en ce que**
les éléments amortissants sont logés de manière mobile par rapport au corps de logement (8) respectif et par rapport à la glissière de profil en U (4, 5), que l'élément intermédiaire (61) du corps de logement (8) est conçu en forme d'une plaque en U, qu'entre les deux bras parallèles et espacés (62, 63) de la plaque (61), il est prévu un boulon de fixation rotatif (64), que sur le boulon de fixation (64), il est monté un corps de retient pivotant en forme de I (65), que sur la glissière de profil en U (4, 5), il est formé une poche de logement en forme de U (66), dans laquelle il est inséré le corps de retient (65) et que ce corps de retient (65) est retenu par un boulon de fixation (68) de manière rotative dans la poche de logement (66) de la glissière de profil en U (4, 5).

7. Protection de chute d'après la revendication 6,
**caractérisée en ce que**
entre la poche de logement (66) et l'extrémité libre du corps de retient (65) arrangé dans la glissière de profil en U (4, 5), il est monté un ressort (67).

8. Protection de chute d'après une des revendications précédentes,
**caractérisée en ce que**
sur le côté de la plaque (3) il est prévu sur la glissière de profil en U (4, 5) un creux rectangulaire (23) et que dans le creux (23), il est monté respectivement un élément d'appui (30) adapté à son contour intérieur.

9. Protection de chute d'après la revendication 8,
**caractérisée en ce que**
sur la paroi intérieure du creux respectif (23), il est formé une glissière de guidage (26) de préférence en forme d'un T, orientés en alignement précis et/ou perpendiculairement l'un par rapport à l'autre, et que l'élément d'appui (30) porte sur la face frontale respective libre de la glissière de guidage (26).

10. Protection de chute d'après une des revendications précédentes,
**caractérisée en ce que**
respectivement deux corps de logement (8) sont disposés en alignement précis l'un par rapport à l'autre.
